# EUROPÄISCHE PATENTSCHRIFT

(11) **EP 0 715 635 B1**
(45) Veröffentlichungstag und Bekanntmachung des Hinweises auf die Patenterteilung: **08.04.1998**
(21) Anmeldenummer: 94924878.5
(22) Anmeldetag: 16.08.1994
(51) Int. Cl.: C08F 220/04, C02F 5/10

(54) **WASSERLÖSLICHE, CARBOXYLGRUPPEN ENTHALTENDE COPOLYMERISATE, VERFAHREN ZU IHRER HERSTELLUNG UND IHRE VERWENDUNG ALS SCALEINHIBITOR**
WATER-SOLUBLE COPOLYMERIZATES CONTAINING CARBOXYL GROUPS, METHODS OF PRODUCING SAID COPOLYMERIZATES, AND USE THEREOF AS SCALE INHIBITORS
COPOLYMERISATS SOLUBLES DANS L'EAU CONTENANT LES GROUPES CARBOXYLE, LEUR PROCEDE DE PREPARATION ET LEUR UTILISATION COMME AGENTS ANTI-TARTRE

(30) Priorität: 27.08.1993 DE 4328817
(43) Veröffentlichungstag der Anmeldung: 12.06.1996
(73) Patentinhaber: BASF AKTIENGESELLSCHAFT, 67056 Ludwigshafen (DE)
(72) Erfinder: DENZINGER, Walter, D-67346 Speyer (DE); HARTMANN, Heinrich, D-67117 Limburgerhof (DE); POTTHOFF-KARL, Birgit, D-67061 Ludwigshafen (DE); BUECHNER, Karl-Heinz, D-68804 Altlu heim (DE); HEIDER, Marc, D-67433 Neustadt (DE); RAUBENHEIMER, Hans-Juergen, D-68775 Ketsch (DE)
(86) Internationale Anmeldenummer: EP9402721
(87) Internationale Veröffentlichungsnummer: WO9506074

(56) Entgegenhaltungen:
- EP-A- 0 123 108
- EP-A- 0 216 479
- EP-A- 0 315 167
- US-A- 4 151 341
- DATABASE WPI Section Ch, Week 8907, Derwent Publications Ltd., London, GB; Class A, AN 89-050519 & JP,A,64 000 109 (NIPPON OIL)

## Beschreibung

Die Erfindung betrifft wasserlösliche, Carboxylgruppen enthaltende Copolymerisate, Verfahren zur Herstellung der Copolymerisate durch Polymerisieren von monoethylenisch ungesättigten Carbonsäuren und anderen copolymerisierbaren monoethylenisch ungesättigten Monomeren in Gegenwart von Radikale bildenden Polymerisationsinitiatoren und die Verwendung der Copolymerisate als Scaleinhibitor.

Aus der US-A-3 756 257 ist die Verwendung von Homopolymerisaten der Acrylsäure als Scaleinhibitor bekannt. Aus der GB-A-1 411 063 ist bekannt, daß man hydrolysierte Polymaleinsäureanhydride bei der Wasserbehandlung einsetzt. Geeignete Polymerisate werden beispielsweise durch Polymerisieren von Maleinsäureanhydrid in Xylol unter Verwendung von Benzoylperoxid als Initiator und anschließende Hydrolyse des so erhaltenen Polymaleinsäureanhydrids hergestellt.

Aus der EP-B-0 009 169 ist ein Verfahren zur Suspensionscopolymerisation von Maleinsäureanhydrid und C₆- bis C₁₀-Alkenen in überschüssigen Alkenen als Suspensionsmedium bekannt. Hierbei verwendet man als Dispergatoren Poly-C₁- bis C₂₀-alkylvinylether.

Aus der EP-A-0 260 386 ist die Herstellung von pulverförmigen Olefin-Maleinsäureanhydrid-Copolymeren durch radikalische Polymerisation von Olefinen und Maleinsäureanhydrid in aromatischen Lösemitteln in Gegenwart von Copolymerisaten aus Ethylen und Vinylacetat oder Polystyrol als Dispergiermittel bekannt.

Aus der GB-A-1 454 657 und der EP-A-0 261 589 ist die Verwendung von hydrolysierten Copolymerisaten des Maleinsäureanhydrids als Scaleinhibitor bekannt.

Gemäß der Lehre der EP-A-0 276 464 erfolgt die Herstellung von wasserlöslichen Copolymerisaten der Maleinsäure durch Copolymerisieren von Maleinsäureanhydrid mit maximal bis zu 20 Gew.-% eines damit copolymerisierbaren anderen monoethylenisch ungesättigten Monomeren in einem aromatischen Kohlenwasserstoff in Gegenwart von Peroxyestern als Polymerisationsinitiatoren. Die Copolymerisation kann gemäß den Angaben in der Anmeldung auch in Gegenwart von Schutzkolloiden durchgeführt werden. Nach dem Entfernen der Lösemittel und der Hydrolyse der Anhydridgruppen werden die Copolymerisate als Wasserbehandlungsmittel zur Verhinderung der Kesselsteinabscheidung und der Wasserhärteausscheidung in Wasser führenden Systemen eingesetzt.

Wie aus den oben angegebenen Literaturstellen bekannt ist, wird die Klumpenbildung und Abscheidung von Polymerisaten auf Teilen der Polymerisationsapparatur bei der Fällungspolymerisation bei Verwendung von Schutzkolloiden vermieden bzw. weitgehend verhindert. Die Copolymerisate fallen dabei jedoch in mehr oder weniger grober Form an und sind oft nur schwierig in Form der Salze in Wasser vollständig auflösbar. In den meisten Fällen entstehen trübe Salzlösungen der Copolymerisate. Beim Dosieren solcher trüben Lösungen mit Hilfe von Dosierpumpen treten jedoch Verstopfungen an den Dosierpumpen auf. Ein weiteres Problem bei der Anwendung von Copolymerisaten aus beispielsweise Maleinsäureanhydrid und Olefinen besteht darin, daß wäßrige Lösungen der Copolymerisate bei der Anwendung als Scaleinhibitor stark schäumen.

Aus der EP-A-0 123 108 sind Copolymerisate aus Maleinsäureanhydrid oder Maleinsäure und Additionsprodukten von Alkylenoxiden an Allylalkohol bekannt. Die Copolymerisate oder ihre Salze werden als Scaleinhibitor verwendet.

Der vorliegenden Erfindung liegt die Aufgabe zugrunde, neue Stoffe zur Verfügung zu stellen, die bei der Anwendung als Scaleinhibitor auch beim Auflösen in Meerwasser klare Lösungen bilden und die bei der Meerwasserentsalzung nach dem multi-stage-flash-evaporation-Verfahren praktisch nicht schäumen.

Die Aufgabe wird erfindungsgemäß gelöst mit wasserlöslichen, Carboxylgruppen enthaltenden Copolymerisaten, wenn sie
(a) 30 bis 80 Mol-% monoethylenisch ungesättigte C₃- bis C₈-Carbonsäuren, deren Anhydride und/oder deren wasserlösliche Salze,
(b) 10 bis 50 Mol-% C₂- bis C₈-Olefine, Styrol, Alkylstyrole, C₁-bis C₁₀-Alkylvinylether und/oder Vinylester von gesättigten C₁- bis C₁₀-monocarbonsäuren und
(c) 0,01 bis 20 Mol-% Vinylether von alkoxylierten C₁- bis C₃₀-Alkoholen
einpolymerisiert enthalten und einen K-Wert von mindestens 8 (bestimmt nach H. Fikentscher an 1 gew.-%igen wäßrigen Lösungen der Natriumsalze der Copolymerisate bei 25°C und pH 7,5) haben.

Die Aufgabe wird außerdem gelöst mit einem Verfahren zur Herstellung von wasserlöslichen Copolymerisaten durch Copolymerisieren von
(a) 30 bis 80 Mol-% monoethylenisch ungesättigten C₃- bis C₈-Carbonsäuren, deren Anhydriden und/oder wasserlöslichen Salzen,
(b) 10 bis 50 Mol-% C₂- bis C₈-Olefinen, Styrol, Alkylstyrolen, C₁- bis C₁₀-Alkylvinylether und/oder Vinylestern von gesättigten C₁-C₁₀-Monocarbonsäuren und
(c) 0,01 bis 20 Mol-% Vinylethern von alkoxylierten C₁- bis C₃₀-Alkoholen
in Gegenwart von Radikale bildenden Polymerisationsinitiatoren.

Gegenstand der Erfindung ist außerdem die Verwendung der oben beschriebenen Copolymerisate als Scaleinhibitor.

Die verwendeten Copolymerisate können anstelle oder neben den Vinylethern von alkoxylierten C₁ - bis C₃₀- Alkoholen Allylether von alkoxylierten C₁ - C₃₀ - Alkoholen als Komponente (C) enthalten.

Die wasserlöslichen Copolymerisate enthalten als Monomere der Gruppe (a) 30 bis 80, vorzugsweise 40 bis 75 Mol-% monoethylenisch ungesättigte C₃- bis C₈-Carbonsäuren, deren Anhydride und/ oder wasserlösliche Salze einpolymerisiert. Geeignete Carbonsäuren sind beispielsweise Acrylsäure, Methacrylsäure, Dimethylacrylsäure, Ethacrylsäure, Allylessigsäure, Vinylessigsäure, Crotonsäure, Maleinsäure, Fumarsäure, Citraconsäure, Methylenmalonsäure, Mesaconsäure und Itaconsäure. Soweit die genannten ungesättigten Carbonsäuren Anhydride bilden können, sind auch diese Anhydride als Monomere der Gruppe (a) geeignet, z.B. Maleinsäureanhydrid, Itaconsäureanhydrid und Methacrylsäureanhydrid. Die monoethylenisch ungesättigten Carbonsäuren können auch in Form ihrer wasserlöslichen Salze bei der Copolymerisation eingesetzt werden. Geeignet sind beispielsweise die Ammonium-, Alkalimetall- und Erdalkalimetallsalze dieser Säuren. Sie werden durch partielle oder vollständige Neutralisation der ungesättigten Carbonsäuren mit Basen erhalten. Geeignete Basen sind beispielsweise Ammoniak, Amine wie C₁- bis C₃₀-Alkylamine, Alkanolamine wie Ethanolamin, Diethanolamin oder Triethanolamin, Morpholin sowie Natronlauge, Kalilauge, Soda, Pottasche, Natriumhydrogencarbonat, Kaliumhydrogencarbonat, Calciumhydroxid und Bariumhydroxid. Vorzugsweise verwendet man Ammoniak oder Natronlauge zur Neutralisation der Carbonsäuren. Die Monomeren der Gruppe (a) können entweder allein oder in Mischung bei der Copolymerisation eingesetzt werden. Außer den partiell neutralisierten Carbonsäuren eignen sich beispielsweise Mischungen aus Maleinsäureanhydrid und Acrylsäure, Mischungen aus Acrylsäure und Itaconsäureanhydrid, Mischungen aus Maleinsäureanhydrid und Itaconsäureanhydrid und Mischungen aus Maleinsäureanhydrid, Acrylsäure und Methacrylsäure. Diese Mischungen können die Mischungspartner in beliebigen Verhältnissen enthalten. Bevorzugt sind Maleinsäureanhydrid und Mischungen aus Maleinsäureanhydrid und Acrylsäure.

Die Copolymerisate enthalten als Monomere der Gruppe (b) 10 bis 50, vorzugsweise 15 bis 49 Mol-% C₂- bis C₈-Olefine, Styrol, Alkylstyrole, C₁- bis C₁₀-Alkylvinylether und/oder Vinylester von gesättigten C₁- bis C₁₀-Monocarbonsäuren einpolymerisiert. Geeignete Olefine sind beispielsweise Ethylen, Propylen, n-Buten, Isobuten, Penten-1, Hexen-1, Hepten-1 und Diisobuten. Außer den genannten α-Olefinen können auch die entsprechenden Isomeren bei der Polymerisation eingesetzt werden. Geeignete Alkylstyrole enthalten 1 bis 3 Kohlenstoffatome in der Alkylgruppe, z.B. α-Methylstyrol. Die Alkylvinylether enthalten 1 bis 10 Kohlenstoffatome in der Alkylgruppe, z.B. Vinylmethylether, Vinylethylether, Vinyl-n-propylether, Vinylisopropylether, Vinyl-n-butylether, Vinylisobutylether, Vinyl-tertiär-butylether, Vinylhexylether und Vinyl-2-ethylhexylether.

Vinylester von gesättigten C₁- bis C₁₀-Monocarbonsäuren sind beispielsweise Vinylformiat, Vinylacetat, Vinylpropionat, Vinylbutyrat und Vinylpivalat. Die Monomeren der Gruppe (b) können bei der Copolymerisation allein oder in Mischung eingesetzt werden, z.B. Mischungen aus Styrol und Isobuten oder Styrol und Vinylacetat oder Mischungen aus Isobuten und Diisobuten. Die Copolymerisate enthalten bevorzugt Isobuten einpolymerisiert.

Die Copolymerisate enthalten als Monomere der Gruppe (c) 0,01 bis 20, vorzugsweise 0,1 bis 15 Mol-% Vinylether und/oder Allylether von alkoxylierten C₁- bis C₃₀-Alkoholen einpolymerisiert. Die alkoxylierten Alkohole können beispielsweise mit Hilfe folgender Formeln charakterisiert werden:

R-O-(EO)ₙ-(PO)ₘ-(BuO)ₒ-H (I),

in der
- R =: C₁- bis C₃₀-Alkyl,
- EO =: -CH₂-CH₂-O-,
- PO =: 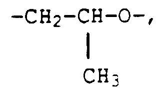
- BuO =: 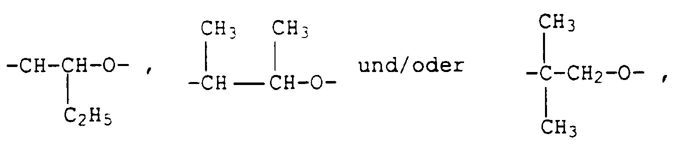
- n, m, o =: 0 bis 100 bedeuten und die Summe n+m+o mindestens 3 beträgt.

Beispiele für Monomere der Gruppe (c) sind folgende Verbindungen, in denen EO, PO und BuO die in Formel I angegebene Bedeutung haben:

CH₃-O-(EO)₃-CH=CH₂

CH₃-O-(EO)₃-CH₂-CH=CH₂

CH₃-O-(EO)₆-CH=CH₂

CH₃-O-(EO)₆-CH₂-CH=CH₂

CH₃-O-(EO)₁₁-CH=CH₂

CH₃-O-(EO)₁₁-CH₂-CH=CH₂

CH₃-O-(EO)₂₀-CH=CH₂

CH₃-O-(EO)₂₀-CH₂-CH=CH₂

CH₃-O-(PO)₁₀-CH=CH₂

CH₃-O-(PO)₁₀-CH₂-CH=CH₂

CH₃-O-(BuO)₁₀-CH=CH₂

CH₃-O-(BuO)₁₀-CH₂-CH=CH₂

CH₃-O-(EO)₄-(PO)₂-CH=CH₂

CH₃-O-(BuO)₂-(EO)₇-CH₂-CH=CH₂

C₂H₅-O-(EO)₇-CH=CH₂

C₂H₅-O-(EO)₁₀-CH₂-CH=CH₂

C₁₀H₂₃-O-(EO)₃-CH₂-CH=CH₂

C₁₀H₂₃-O-(EO)₅-CH=CH₂

C₁₀H₂₃-O-(EO)₇-CH=CH₂

C₁₀H₂₃-O-(EO)₁₁-CH₂-CH=CH₂

C₁₀H₂₃-O-BuO-PO-(EO)₂-CH=CH₂

C₁₃H₂₇-O-(EO)₁₅-CH=CH₂

C₁₃H₂₇-O-(EO)₂₀-CH=CH₂

C₁₃H₂₇-O-(EO)₃₀-CH₂-CH=CH₂

C₁₆H₃₃-O-(EO)₅₀-CH=CH₂

C₁₆H₃₃-O-(EO)₈₀-CH₂-CH=CH₂

C₁₈H₃₇-O-(EO)₅₀-CH=CH₂

C₁₈H₃₇-O-(EO)₅₀-CH₂-CH=CH₂

C₄H₉-O-(PO)₂₄-(EO)₄-CH=CH₂.

Die den Monomeren (c) zugrundeliegenden alkoxylierten Alkohole, die mindestens zwei verschiedene Alkylenoxide einpolymerisiert enthalten, können die Alkylenoxid-Einheiten in Form von Blöcken oder in statistischer Verteilung einpolymerisiert enthalten. Von den Monomeren der Gruppe (c) werden vorzugsweise Vinylether von C₁- bis C₁₈-Alkylpolyglykolen eingesetzt.

Die erfindungsgemäßen Copolymerisate werden durch Copolymerisieren der Monomeren der Gruppen (a), (b) und (c) in Gegenwart von Radikale bildenden Polymerisationsinitiatoren hergestellt. Die Copolymerisation kann dabei kontinuierlich oder diskontinuierlich nach allen bekannten Verfahren der Masse-, Lösungs-, Fällungs-, Suspensions- und Emulsionspolymerisation erfolgen. Als Radikale bildende Polymerisationsinitiatoren kommen sämtliche üblicherweise hierfür verwendeten Peroxide, Hydroperoxide, Azoverbindungen sowie Redoxkatalysatoren in Betracht. Beispielhaft genannt seien Acetylcyclohexansulfonylperoxid, Diacetylperoxidicarbonat, Dicyclohexylperoxidicarbonat, Di-2-ethylhexylperoxidicarbonat, tert.-Butylperneodecanoat, 2,2-Azobis-(4-methoxy-2,4-dimethylvaleronitril), tert.-Butylperpivalat, tert.-Butylper-2-ethylhexanoat, tert.-Butylpermaleinat, tert.-Butylperisobutyrat, 2,2-Azobis-(isobutyronitril), Bis-(tert.-butylperoxid)cyclohexan, tert.-Butylperoxiisopropylcarbonat, tert.-Butylperacetat, Dicumylperoxid, Di-tert.-amylperoxid, Di-tert.-butylperoxid, p-Menthanhydroperoxid, Cumolhydroperoxid, tert.-Butylhydroperoxid, Wasserstoffperoxid, Natriumperoxodisulfat, Kaliumperoxodisulfat, Ammoniumperoxodisulfat und Peroxodischwefelsäure. In manchen Fällen hat sich der Einsatz von Initiatormischungen bewährt, wobei man Initiatoren auswählt, die bei unterschiedlichen Temperaturen zerfallen. Die Polymerisationsinitiatoren werden in den üblichen Mengen, d.h. in Mengen von 0,1 bis 20, vorzugsweise 0,2 bis 15 Gew.-%, bezogen auf die eingesetzten Monomeren, verwendet. Der Zerfall der Peroxide und der Azoverbindungen kann dadurch beschleunigt werden, daß man die Copolymerisation in Gegenwart von Redox-Coinitiatoren wie Benzoin, Dimethylanilin, Ascorbinsäure sowie organisch löslichen Komplexen von Schwermetallen wie Kupfer, Kobalt, Mangan, Eisen, Nickel und Chrom verwendet. Die üblicherweise eingesetzten Mengen an Coinitiatoren betragen 0,1 bis 2000, vorzugsweise 0,1 bis 1000 ppm. Die Initiatoren bzw. Initiatorsysteme werden vorzugsweise so ausgewählt, daß ihre Halbwertszeit bei der Polymerisationstemperatur weniger als 3 Stunden beträgt.

Die Copolymerisation kann beispielsweise in dem Temperaturbereich von 40 bis 200, vorzugsweise 80 bis 150°C durchgeführt werden. Falls in der Reaktionsmischung Komponenten enthalten sind, deren Siedepunkt unterhalb der Polymerisationstemperatur liegt, erfolgt die Copolymerisation unter Druck. In allen Fällen wird unter Ausschluß von Sauerstoff gearbeitet.

Um niedrigmolekulare Copolymerisate herzustellen, ist es oftmals zweckmäßig, die Copolymerisation in Gegenwart von Reglern durchzuführen. Geeignete Regler sind beispielsweise Allylalkohol, Buten-1-ol-3, organische Mercaptoverbindungen wie 2-Mercaptoethanol, 2-Mercaptopropanol, Mercaptobutanole, Mercaptoessigsäure, Mercaptopropionsäure, tert.-Butylmercaptan, n-Butylmercaptan, n-Octylmercaptan, n-Dodecylmercaptan und tert.-Dodecylmercaptan. Falls bei der Copolymerisation ein Regler oder eine Mischung von mehreren Reglern eingesetzt wird, so betragen die angewendeten Mengen 0,1 bis 10 Gew.-%, bezogen auf die eingesetzten Monomeren.

Die Copolymerisation kann in den üblichen Apparaturen durchgeführt werden, z.B. in Rührkesseln, die beispielsweise mit einem Anker-, Blatt-, Impeller- oder Mehrstufenimpuls-Gegenstromrührer ausgestattet sind. Für eine kontinuierliche Herstellung der Copolymerisate bedient man sich Rührkesselnkaskaden, Rohrreaktoren und statischer Mischer. Die einfachste Polymerisationsmethode ist die Massepolymerisation. Dabei werden die Monomeren der Gruppen (a) bis (c) in Gegenwart eines Polymerisationsinitiators und in Abwesenheit von Löse- und Verdünnungsmitteln polymerisiert. Zweckmäßigerweise mischt man alle Monomeren in der gewünschten Zusammensetzung, legt einen kleinen Teil der Mischung, z.B. 5 bis 10 % im Reaktor vor, erhitzt die Mischung unter Rühren auf die gewünschte Polymerisationstemperatur und dosiert die restliche Monomermischung und separat davon den Initiator und gegebenenfalls Coinitiator sowie gegebenenfalls Regler innerhalb von 1 bis 10, vorzugsweise 2 bis 5 Stunden gleichmäßig oder in Intervallen zu. Hierbei kann es zweckmäßig sein, den Initiator und eventuell auch den Coinitiator getrennt von den Monomeren in Form einer Lösung in einer geringen eines geeigneten Lösemittels zuzudosieren. Die Copolymerisate können direkt isoliert oder zu gebrauchsfertigen wäßrigen Lösungen verarbeitet werden. Sofern sie sich nicht unmittelbar in Wasser lösen, werden sie durch Zugabe einer Base partiell oder vollständig neutralisiert.

Ein weiteres Herstellverfahren für die Copolymerisate ist die Lösungspolymerisation. Sie wird in Lösemitteln durchgeführt, in denen die Monomeren und die gebildeten Copolymeren löslich sind. Hierfür sind alle Lösemittel geeignet, die diese Bedingungen erfüllen und die mit den Monomeren unter den Polymerisationsbedingungen nicht reagieren. Beispiele für geeignete Lösemittel sind Aceton, Methylethylketon, Diethylketon, Methylisobutylketon, Ethylacetat, Butylacetat, Ethylenglykoldimethylether, Diethylenglykoldimethylether, Ethylenglykoldiethylether, Diethylenglykoldiethylether, Tetrahydrofuran und Dioxan. Um niedrigmolekulare Copolymerisate herzustellen, verwendet man als Lösemittel vorzugsweise Tetrahydrofuran oder Dioxan, weil diese Lösemittel regelnd in die Polymerisation eingreifen. Wie oben bei der Massepolymerisation beschrieben, ist es auch hier zweckmäßig, das Lösemittel und einen Teil der Monomermischung (z.B. ca. 5 bis 20 %) in einem Polymerisationsreaktor vorzulegen und den Rest der Monomermischung und den Initiator sowie gegebenenfalls Coinitiator und Regler zuzudosieren. Bei der Lösungspolymerisation kann die Konzentration der Monomeren in einem weiten Bereich schwanken, z.B. 20 bis 80 Gew.-% betragen. Vorzugsweise beträgt die Konzentration der Monomeren in der zur Polymerisation eingesetzten Lösung 30 bis 70 Gew.-%. Das Copolymerisat kann nach Abschluß der Polymerisation aus der Lösung problemlos durch Verdampfen des Lösemittels isoliert werden. Die Copolymerisate sind zumindest in Form ihrer Alkalisalze in Wasser löslich.

Ein bevorzugtes Verfahren zur Herstellung der Copolymerisate ist die Fällungspolymerisation. Hierbei werden solche Lösemittel eingesetzt, in denen die Monomeren löslich und die gebildeten Copolymerisate unlöslich sind und daher ausfallen. Geeignete Lösemittel für die Fällungspolymerisation sind beispielsweise Ether wie Diethylether, Dipropylether, Dibutylether, Methyltert.-butylether, Diethylenglykoldimethylether, Toluol, Xylol, Ethylbenzol, Cumol, aliphatische Kohlenwasserstoffe und Mischungen der genannten Lösemittel. Wie aus dem eingangs beschriebenen Stand der Technik bekannt ist, ist es bei Verfahren der Fällungspolymerisation zweckmäßig, in Gegenwart eines Schutzkolloids zu arbeiten, um eine Aggregatbildung von Polymerteilchen und eine Abscheidung der Polymeren auf Reaktorwand und Rührer mindest weitgehend zu vermeiden. Als Schutzkolloide können die in den oben angegebenen Literaturstellen beschriebenen Stoffe verwendet werden. Sie sind in den Lösemitteln gut löslich und reagieren nicht mit den Monomeren. Geeignet sind beispielsweise Copolymerisate des Maleinsäureanhydrids mit Vinylalkylethern und/ oder Olefinen mit 4 bis 20 C-Atomen sowie deren Monoester mit C₁₀- bis C₂₀-Alkoholen oder Mono- und Diamide mit C₁₀- bis C₂₀-Alkylaminen sowie Polyalkylvinylether, deren Alkylgruppe 1 bis 20 C-Atome enthält, wie Polymethylvinylether, Polyethylvinylether, Polyisobutylvinylether sowie Polyoctadecylvinylether. Die Schutzkolloide haben üblicherweise K-Werte von 20 bis 100 (bestimmt nach H. Fikentscher in 1 gew.-%iger Lösung in Cyclohexanon bei 25°C).

Bei der Fällungspolymerisation verwendet man üblicherweise dann Schutzkolloide, wenn die Konzentration der Monomeren im Lösemittel mehr als 30 Gew.-% beträgt. Die zugesetzten Mengen an Schutzkolloid liegen üblicherweise bei 0,05 bis 4 Gew.-%, bezogen auf die eingesetzten Monomeren. In manchen Fällen kann es von Vorteil sein, mehrere Schutzkolloide zu kombinieren. Bei der Fällungspolymerisation ist es beispielsweise zweckmäßig, Lösemittel, Schutzkolloid und einen Teil der Monomermischung im Reaktor vorzulegen und bei gewählter Polymerisationstemperatur unter intensivem Rühren den Rest an Monomermischung und Initiator sowie gegebenenfalls Coinitiator und Regler zuzudosieren. Die Zulaufzeiten für die Monomermischung und Initiator betragen im allgemeinen 1 bis 10, vorzugsweise 2 bis 5 Stunden. Es ist jedoch auch möglich, alle Einsatzstoffe gemeinsam in einem Reaktor zu polymerisieren, wobei dann jedoch Probleme mit der Wärmeabführung auftreten können. Die Konzentrationen der zu polymerisierenden Monomeren in dem Lösemittel betragen beispielsweise 10 bis 80, vorzugsweise 30 bis 70 Gew.-%. Nach Abschluß der Polymerisation können die Polymeren direkt isoliert und in Verdampfern, Bandtrocknern, Schaufeltrocknern, Sprühtrocknern oder Wirbelbett-trocknern vom anhaftenden Lösemittel befreit werden. Aus den Copolymerisatpulvern können dann wäßrige Lösungen bzw. durch Neutralisieren wäßrige Lösungen der Salze der Copolymerisate hergestellt werden. Eine bevorzugte Methode zur Herstellung der wäßrigen Salzlösung der Copolymerisate besteht darin, daß man der bei der Polymerisation anfallenden Polymerisatsuspension zunächst Wasser zusetzt und dann das Lösemittel durch Einleiten von Wasserdampf abdestilliert. Danach erfolgt dann die Neutralisation durch Zugabe einer Base. Für die Neutralisation geeignete Basen wurden bereits oben genannt. Zur partiellen oder vollständigen Neutralisation der Copolymerisate eignen sich vorzugsweise Natriumhydroxid, Kaliumhydroxid, Magnesiumhydroxid, Ammoniak, Ethanolamin, Diethanolamin und Triethanolamin. Die Copolymerisate sind zumindest in der Salzform in Wasser löslich. Die wäßrigen Lösungen sind braun bis farblos und klar.

Die Copolymerisate haben K-Werte von mindestens 8 (bestimmt nach H. Fikentscher an 1 gew.-%igen wäßrigen Lösungen der Natriumsalze der Copolymerisate bei 25°C und pH 7,5). Die K-Werte der Copolymerisate können bis zu ca. 300 betragen. Bevorzugt werden solche wasserlöslichen Copolymerisate, die
(a) 40 bis 75 Mol-% Maleinsäure, Maleinsäureanhydrid, Acrylsäure und/oder Methacrylsäure,
(b) 15 bis 49 Mol-% Isobuten, Diisobutenmethylvinylether, Styrol und/oder Vinylacetat und
(c) 0,1 bis 15 Mol-% Vinylether von C₁- bis C₁₈-Alkoholen enthalten, an die 3 bis 20 Mol Ethylenoxid und/oder Propylenoxid angelagert sind,
einpolymerisiert enthalten und K-Werte von 10 bis 100 haben.

Die Copolymerisate können auf verschiedenen Gebieten verwendet werden, z.B. als Dispergatoren zur Herstellung von Kunststoff-, Wachs- oder Öldispersionen oder als Dispergiermittel für Pigmente zur Herstellung wäßriger hochkonzentrierter Pigmentanschlämmungen. Die Copolymerisate können in Abhängigkeit von ihrer Zusammensetzung als Dispergatoren für Öl-in-Wasser-Dispersionen oder als Dispergatoren für Wasser-in-Öl-Dispersionen verwendet werden. Vorzugsweise werden die Copolymerisate als Scaleinhibitor verwendet. Sie verhindern die Abscheidung von Kesselstein bzw. die Wasserhärteausscheidung in wasserführenden Systemen. Die Wirkungsweise der erfindungsgemäßen Copolymerisate als Scaleinhibitor besteht vor allem darin, daß die Bildung von festhaftenden Niederschlägen der Härtebildnersalze wie Calciumcarbonat, Magnesiumoxid, Magnesiumcarbonat, Calcium-, Barium- oder Strontiumsulfat, Calciumphosphat und ähnliche schwerlösliche Erdalkalisalze verhindert wird. Durch Zusatz der Copolymerisate im unterstöchiometrischen Dosierungsbereich wird die Bildung von Ablagerungen so beeinflußt, daß keine harten und steinartigen Beläge entstehen, sondern leicht ausschwemmbare, im Wasser fein verteilte Ausscheidungen gebildet werden. Auf diese Weise werden die Oberflächen von beispielsweise Wärmeaustauschern, Rohren oder Pumpenbauteilen von Belägen freigehalten und deren Korrosionsneigung stark verringert. Insbesondere wird dadurch die Gefahr von Lochfraßkorrosion vermindert. Ferner wird das Aufwachsen von Mikroorganismen auf diesen Metalloberflächen erschwert. Durch den Einfluß der Belagsverhinderer kann die Lebensdauer von solchen Anlagen erhöht und Stillstandzeiten zur Reinigung von Anlagenteilen erheblich reduziert werden. Bei den wasserführenden Systemen, die mit einem Scaleinhibitor versetzt werden, handelt es sich beispielsweise um offene oder geschlossene Kühlkreisläufe, beispielsweise von Kraftwerken oder chemischen Anlagen wie Reaktoren, Destillationsapparaturen oder ähnlichen Bauteilen, bei denen Wärme abgeführt werden muß. Der Einsatz der Scaleinhibitoren kann auch in Boilerwässern und Dampferzeugern vorgenommen werden. Eine bevorzugte Anwendung der erfindungsgemäß zu verwendenden Scaleinhibitoren ist die Entsalzung von Meerwasser durch Destillation oder mit Hilfe von Membranverfahren, wie die umgekehrte Osmose oder Elektrodialyse. So wird beispielsweise beim sogenannten multi-stage-flash-evaporation-Destillationsverfahren zur Meerwasserentsalzung eingedicktes Meerwasser mit erhöhter Temperatur im Umlauf gefahren. Die Belagsverhinderer unterbinden dabei wirksam die Ausscheidung von Härtebildnern wie beispielsweise Bruzit und deren Anbacken an Bauteilen der Anlage. Die für die Scaleinhibierung benötigten Mengen an Copolymerisat betragen beispielsweise 0,1 bis 100 ppm Copolymerisat, bezogen auf das wäßrige Medium. Für den Einsatz als Scaleinhibitoren werden vorzugsweise Copolymerisate mit einem K-Wert von 10 bis 50 (bestimmt nach H. Fikentscher an 1 gew.-%igen wäßrigen Lösungen der Natriumsalze bei 25°C und pH 7,5) eingesetzt.

Die Copolymerisate können auch als Belagsverhinderer beim Eindampfen von Zuckersäften aus Rohr- oder Rübenzucker verwendet werden. Dem Zuckerdünnsaft werden bekanntlich zur Reinigung Calciumhydroxid, Kohlendioxid, Schwefeldioxid und gegebenenfalls Phosphorsäure zugesetzt. Nach der Filtration des so behandelten Zuckersafts verbleiben schwerlösliche Calciumsalze wie Calciumcarbonat, Calciumsulfat oder Calciumphosphat. Diese Salze fallen dann während des Eindampfprozesses aus und können dabei steinartige Beläge auf Wärmetauscheroberflächen bilden. Ebenso entstehen auch steinartige Beläge aus Zuckerbegleitstoffen wie Kieselsäure oder Calciumsalzen organischer Säuren wie beispielsweise Oxalsäure. Die erfindungsgemäß zu verwendenden Copolymerisate wirken auch bei Zusatz zum Zuckerdünnsaft als Scaleinhibitor und verhindern die Bildung steinartiger Beläge in den Apparaten, in denen die Eindampfung des Zuckerdünnsafts erfolgt.

Die Copolymerisate können außerdem als Inkrustierungs- und Vergrauungsinhibitoren in Mengen von 0,5 bis 10 Gew.-% in Waschmittelformulierungen eingesetzt werden. Die Copolymerisate werden üblicherweise in Form verdünnter wäßriger Lösungen angewendet. Der besondere Vorteil der erfindungsgemäßen Copolymerisate gegenüber den bekannten Copolymerisaten besteht darin, daß beim Verdünnen der wäßrigen Copolymerisatlösungen mit Meerwasser keine Trübung eintritt, so daß solche Lösungen ohne Schwierigkeiten dosiert werden können. Gegenüber den bekannten Copolymerisaten weisen die erfindungsgemäßen Copolymerisate außerdem den Vorteil auf, daß die Schaumbildung beim Eindampfen von Meerwasser stark vermindert ist.

Die K-Werte der Copolymerisate wurden nach H. Fikentscher, Cellulose-Chemie, Band 13, 48 bis 64 und 71 bis 74 (1932) in 1 gew.-%iger wäßriger Lösung der Natriumsalze der Copolymerisate bei 25°C und einem pH-Wert von 7,5 gemessen. Die Prozentangaben bedeuten Gewichtsprozent.

### Beispiele 1 bis 10

### Herstellung der Copolymerisate

In einem beheizbaren Druckreaktor, der mit einem Rührer und Zulaufvorrichtungen ausgestattet ist, werden 2700 g des in Tabelle 1 jeweils angegebenen Lösemittels, und in den Beispielen 1 und 2 jeweils 6 g 2-Mercaptoethanol vorgelegt und auf die in Tabelle 1 jeweils angegebene Temperatur erhitzt. Sobald diese Temperatur erreicht ist, gibt man innerhalb von 4 Stunden die in Tabelle 1 jeweils angegebenen Monomeren (a), (b) und (c) in 300 g des in Tabelle 1 ebenfalls angegebenen Lösemittels und separat davon innerhalb von 5 Stunden eine Lösung von 6 g tert.-Butylperpivalat in 100 g des jeweils verwendeten Lösemittels gleichmäßig zu. Nach Beendigung der Initiatorzugabe wird das Reaktionsgemisch noch 2 Stunden bei der in der Tabelle angegebenen Temperatur gerührt, danach abgekühlt und mit 300 g Wasser versetzt. Durch Einleiten von Wasserdampf entfernt man das Lösemittel und stellt durch Zugabe von 50 %iger wäßriger Natronlauge einen pH-Wert von 7,5 ein. Die so erhältlichen 40 %igen wäßrigen Polymerlösungen sind fast farblos (Beispiel 6), gelblich (Beispiele 4, 5 und 9) oder bräunlich gefärbt (Beispiele 1, 2, 3, 7, 8 und 10). In allen Fällen liegen klare wäßrige Lösungen vor.

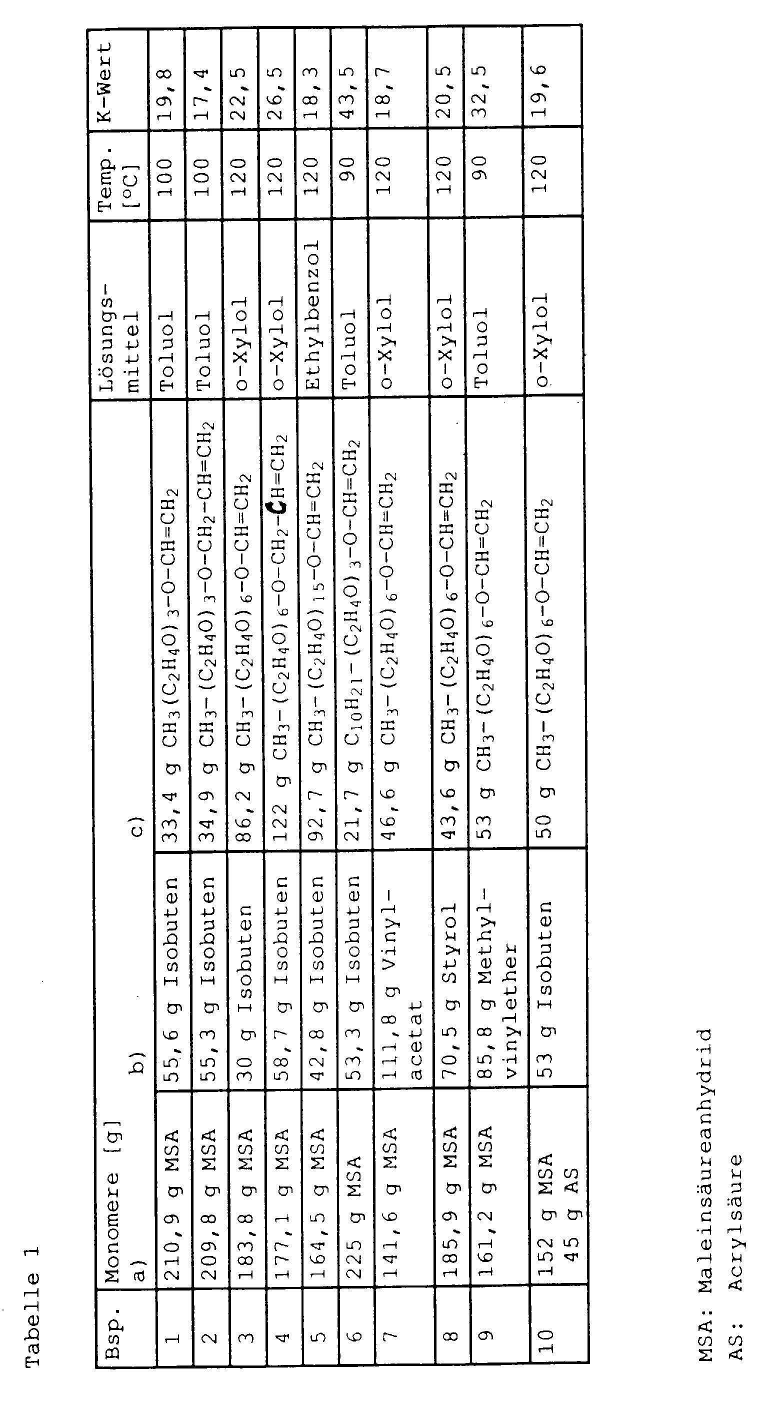

Um die anwendungstechnischen Eigenschaften der Copolymerisate zu ermitteln, wird ihr Verhalten bei der Meerwasserentsalzung, bei der Verdünnung mit 2 %iger wäßriger Kochsalzlösung und beim Durchleiten von Luft bezüglich der Schaumbildung beurteilt. Hierfür wurden folgende Prüfmethoden angewendet:

### Scaleinhibierung (Belagsverhinderung) bei der Meerwasserentsalzung

In diesem Test werden die Copolymerisate als Inhibitor bei der Bildung von Calcium- und Magnesiumhydroxiden und -carbonaten aus synthetischer Meerwasserlösung untersucht. Bei der Meerwasserentsalzung bilden besonders Calciumcarbonat und Magnesiumhydroxid auf den Wärmetauscheroberflächen festhaftende und störende Beläge. Auch die Bildung von Bariumsulfat ist hierbei ein ernst zu nehmendes Problem. Die Testlösung besteht aus einer wäßrigen Salzlösung, die
70°d Mg²⁺
14°d Ca²⁺
70°d CO₃²⁻
enthält.

Die synthetische Meerwasserlösung wird dann mit jeweils 25 ppm der in den Beispielen 1 bis 10 beschriebenen Copolymerisate versetzt und für 3 Stunden in einer dynamischen Umlaufapparatur im Kreis gepumpt. Nach einer Testdauer von 3 Stunden werden Proben entnommen, die titrimetrisch auf den Gehalt an Wasserhärte analysiert werden. Durch die Abnahme an Wasserhärte im Verlauf des Versuches kann man auf die sich bildenden Beläge im Wärmeaustauscher zurückrechnen. Je geringer der Härtegrad in der entnommenen Wasserprobe ist, um so mehr Belag hat sich auf den Wärmeaustauscherrohren abgesetzt. Die ermittelten Wasserhärten sind in Tabelle 2 aufgelistet. Ein hoher Härtegrad nach 3 Stunden Testzeit läßt auf eine gute Scaleinhibierung (Belagsverhinderung) schließen.

### Salzstabilität in Lösung

Um die Salzstabilität der nach den Beispielen 1 bis 10 erhaltenen 40 %igen wäßrigen Copolymerisatlösungen zu testen, werden die Lösungen jeweils durch Zusatz von 2 %iger Kochsalzlösung bis auf einen Copolymerisatgehalt von 10 % verdünnt. Nach einer Lagerung von 24 Stunden im Wärmeschrank wird das Aussehen der verdünnten Lösung beurteilt. Die Ergebnisse sind in Tabelle 2 angegeben.

### Bestimmung der Schaumbildung

Die in Tabelle 1 angegebenen 40 %igen wäßrigen Copolymerisatlösungen werden jeweils mit destilliertem Wasser auf einen Copolymerisatgehalt von 10 Gew.-% verdünnt. 200 ml der verdünnten Lösung werden dann in ein 1500 ml fassendes Schaumrohr eingefüllt. In das Schaumrohr wird von unten über eine Fritte 13,5 1 Luft/Stunde eingeleitet. 5 Minuten nach Beginn des Einleitens der Luft wird die Schaumhöhe über dem Flüssigkeitsspiegel gemessen. Die Meßergebnisse sind in Tabelle 2 angegeben und werden darin mit den Meßergebnissen der Vergleichsbeispiele 1 bis 5 verglichen.

### Vergleichsbeispiel 1

Gemäß der GB-A-1 411 063, Beispiel 1 wurde ein hydrolysiertes Homopolymerisat der Maleinsäure durch Polymerisieren von Maleinsäureanhydrid in Xylol mit Di-tert.-Butylperoxid als Katalysator bei einer Temperatur von 130°C hergestellt.

### Vergleichsbeispiel 2

Gemäß der EP-A-0 261 589, Beispiel 6 wurde ein hydrolysiertes Homopolymerisat von Maleinsäureanhydrid durch Polymerisieren von Maleinsäureanhydrid in Xylol mit tert.-Butylper-2-ethylhexanoat beim Siedepunkt des Xylols hergestellt.

### Vergleichsbeispiel 3

Gemäß Beispiel 14 der GB-A-1 454 657 wurde ein Terpolymerisat aus Maleinsäureanhydrid, Vinylacetat und Ethylacrylat im Molverhältnis 9:2:1 als Scaleinhibitor getestet.

### Vergleichsbeispiel 4

Das in Beispiel 1 der EP-A-0 276 464 beschriebene Copolymerisat aus Maleinsäureanhydrid und Hydroxypropylacrylat wurde als Scaleinhibitor getestet.

### Vergleichsbeispiel 5

Die oben beschriebene Testlösung wurde ohne jeden weiteren Zusatz untersucht.

**Tabelle 2**

| Bsp. | Vgl.bsp. | Belagsverhinderung - Wasserhärte | | Salzlösung n. 24 Std. | Schaumhöhe 0̸ von 3 Messungen in mm |
|---|---|---|---|---|---|
| | | Beginn | n. 3 Std. | | |
| 11 | - | 84 | 65 | klar | 10 |
| 12 | - | 84 | 69 | klar | 10 |
| 13 | - | 84 | 63 | klar | 0 |
| 14 | - | 84 | 68 | klar | 10 |
| 15 | - | 84 | 62 | klar | 0 |
| 16 | - | 84 | 66 | klar | 15 |
| 17 | - | 84 | 60 | klar | 35 |
| 18 | - | 84 | 63 | klar | 40 |
| 19 | - | 84 | 59 | klar | 10 |
| 20 | - | 84 | 70 | klar | 5 |
| | 1 | 84 | 49 | unlösliche Anteile | 55 |
| | 2 | 84 | 50 | unlösliche Anteile | 50 |
| | 3 | 84 | 55 | klar | 45 |
| | 4 | 84 | 52 | klar | 30 |
| | 5 | 84 | 42 | - | - |

## Patentansprüche

1. Wasserlösliche, Carboxylgruppen enthaltende Copolymerisate, dadurch gekennzeichnet, daß sie
(a) 30 bis 80 Mol-% monoethylenisch ungesättigte C₃- bis C₈-Carbonsäuren, deren Anhydride und/oder deren wasserlösliche Salze,
(b) 10 bis 50 Mol-% C₂- bis C₈-Olefine, Styrol, Alkylstyrole, C₁- bis C₁₀-Alkylvinylether und/oder Vinylester von gesättigten C₁- bis C₁₀-Monocarbonsäuren und
(c) 0,01 bis 20 Mol-% Vinylether von alkoxylierten C₁- bis C₃₀-Alkoholen
einpolymerisiert enthalten und einen K-Wert von mindestens 8 (bestimmt nach H. Fikentscher an 1 gew.-%igen wäßrigen Lösungen der Na-Salze der Copolymerisate bei 25°C und pH 7,5) haben.

2. Verfahren zur Herstellung von wasserlöslichen Carboxylgruppen enthaltenden Copolymerisaten nach Anspruch 1, dadurch gekennzeichnet, daß man
(a) 30 bis 80 Mol-% monoethylenisch ungesättigte C₃- bis C₈-Carbonsäuren, deren Anhydride und/oder deren wasserlösliche Salze,
(b) 10 bis 50 Mol-% C₂- bis C₈-Olefine, Styrol, Alkylstyrole, C₁- bis C₁₀-Alkylvinylether und/oder Vinylester von gesättigten C₁- bis C₁₀-Monocarbonsäuren und
(c) 0,01 bis 20 Mol-% Vinylether von alkoxylierten C₁- bis C₃₀-Alkoholen
in Gegenwart von Radikale bildenden Polymerisationsinitiatoren copolymerisiert.

3. Verwendung von wasserlöslichen, carboxylgruppen enthaltenden Copolymerisaten mit einem K-Wert von mindestens 8 (bestimmt nach H. Fikentscher an 1 gew.-%igen wäßrigen Lösungen der Na-Salze der Copolymerisate bei 25°C und pH 7,5), die dadurch erhältlich sind, daß man
(a) 30 bis 80 Mol-% monoethylenisch ungesättigte C₃- bis C₈-Carbonsäuren, deren Anhydride und/oder deren wasserlösliche Salze,
(b) 10 bis 50 Mol-% C₂- bis C₈-Olefine, Styrol, Alkylstyrole, C₁- bis C₁₀-Alkylvinylether und/oder Vinylester von gesättigten C₁- bis C₁₀-Monocarbonsäuren und
(c) 0,01 bis 20 Mol-% Vinylether und/oder Allylether von alkoxylierten C₁- bis C₃₀-Alkoholen
in Gegenwart von Radikale bildenden Polymerisationsinitiatoren copolymerisiert, als Scaleinhibitor.

## Claims

1. A water-soluble, carboxyl-containing copolymer which comprises
(a) 30 to 80 mol% of monoethylenically unsaturated C₃-C₈-carboxylic acids, their anhydrides and/or their water-soluble salts,
(b) 10 to 50 mol% of C₂-C₈-olefins, styrene, alkylstyrenes, C₁-C₁₀-alkyl vinyl ethers and/or vinyl esters of saturated C₁-C₁₀-monocarboxylic acids and
(c) 0.01 to 20 mol% of vinyl ethers of alkoxylated C₁-C₃₀-alcohols
as copolymerized units and has a K value of at least 8 (determined by the method of H. Fikentscher on 1% by weight aqueous solutions of the sodium salts of the copolymers at 25°C and pH 7.5).

2. A process for preparing a water-soluble carboxyl-containing copolymer as claimed in claim 1, which comprises copolymerizing
(a) 30 to 80 mol% of monoethylenically unsaturated C₃-C₈-carboxylic acids, their anhydrides and/or their water-soluble salts,
(b) 10 to 50 mol% of C₂-C₈-olefins, styrene, alkylstyrenes, C₁-C₁₀-alkyl vinyl ethers and/or vinyl esters of saturated C₁-C₁₀-monocarboxylic acids and
(c) 0.01 to 20 mol% of vinyl ethers of alkoxylated C₁-C₃₀-alcohols
in the presence of free-radical polymerization initiators.

3. The use of a water-soluble, carboxyl-containing copolymer which has a K value of at least 8 (determined by the method of the H. Fikentscher on 1% by weight aqueous solutions of the sodium salts of the copolymers at 25°C and pH 7.5), and which is obtainable by copolymerizing
(a) 30 to 80 mol% of monoethylenically unsaturated C₃-C₈-carboxylic acids, their anhydrides and/or their water-soluble salts,
(b) 10 to 50 mol% of C₂-C₈-olefins, styrene, alkylstyrenes, C₁-C₁₀-alkyl vinyl ethers and/or vinyl esters of saturated C₁-C₁₀-monocarboxylic acids and
(c) 0.01 to 20 mol% of vinyl ethers of alkoxylated C₁-C₃₀-alcohols
in the presence of free radical polymerization initiators, as scale inhibitor.

## Revendications

1. Copolymères hydrosolubles contenant des groupements carboxy, caractérisés en ce qu'ils contiennent en chaîne polymère
(a) 30 à 80% en moles d'acides carboxyliques en C₃-C₈ à insaturation monoéthylénique, leurs anhydrides et/ou leurs sels hydrosolubles,
(b) 10 à 50 % en moles d'oléfines en C₂-C₈, de styrène, d'alkylstyrènes, d'oxydes de vinyle et d'alkyle en C₁-C₁₀ et/ou d'esters vinyliques d'acides monocarboxyliques en C₁-C₁₀ saturés
(c) 0,01 à 20% en moles d'éthers vinyliques d'alcools en C₁-C₃₀ alcoxylés
et ont une valeur K d'au moins 8 (déterminée selon H. Fikentscher sur des solutions aqueuses à 1% en poids des sels de sodium des copolymères à 25°C et pH 7,5).

2. Procédé de préparation de copolymères hydrosolubles contenant des groupements carboxy selon la revendication 1, caractérisé en ce qu'on copolymérise en présence d'amorceurs de polymérisation radicalaires
(a) 30 à 80% en moles d'acides carboxyliques en C₃-C₈ à insaturation monoéthylénique, leurs anhydrides et/ou leurs sels hydrosolubles,
(b) 10 à 50 % en moles d'oléfines en C₂-C₈, de styrène, d'alkylstyrènes, d'oxydes de vinyle et d'alkyle en C₁-C₁₀ et/ou d'esters vinyliques d'acides monocarboxyliques en C₁-C₁₀ saturés
(c) 0,01 à 20% en moles d'éthers vinyliques d'alcools en C₁-C₃₀ alcoxylés

3. Utilisation de copolymères hydrosolubles contenant des groupements carboxy ayant une valeur K d'au moins 8 (estimée selon H. Fikentscher sur des solutions aqueuses à 1% en poids des sels de sodium des copolymères à 25°C et pH 7,5), que l'on obtient en copolymèrisant en présence d'amorceurs de polymérisation radicalaires
(a) 30 à 80% en moles d'acides carboxyliques en C₃-C₈ à insaturation monoéthylénique, leurs anhydrides et/ou leurs sels hydrosolubles,
(b) 10 à 50 % en moles d'oléfines en C₂-C₈, de styrène, d'alkylstyrènes, d'oxydes de vinyle et d'alkyle en C₁-C₁₀ et/ou d'esters vinyliques d'acides monocarboxyliques en C₁-C₁₀ saturés
(c) 0,01 à 20% en moles d'éthers vinyliques d'alcools en C₁-C₃₀ alcoxylés
en tant qu'inhibiteur d'entartrage.
